# FASCICULE DE BREVET EUROPEEN

(11) **EP 3 898 468 B1**
(45) Date de publication et mention de la délivrance du brevet: **07.12.2022**
(21) Numéro de dépôt: 19835511.7
(22) Date de dépôt: 17.12.2019
(51) Int. Cl.: B65G 47/14, B65G 47/256, G01N 35/04

(54) **DISPOSITIF DE POSITIONNEMENT DE TUBES**
VORRICHTUNG ZUR POSITIONIERUNG VON ROHREN
DEVICE FOR POSITIONING TUBES

(30) Priorité: 19.12.2018 CH 15642018
(43) Date de publication de la demande: 27.10.2021
(73) Titulaire: Ciposa SA, 2068 Hauterive (CH)
(72) Inventeur: STAUFFER, Florian, 2052 Fontainemelon (CH)
(74) Mandataire: P&TS SA (AG, Ltd.)
(86) Numéro de dépôt international: PCT/IB2019/060904
(87) Numéro de publication internationale: WO 2020/128819

(56) Documents cités:
- WO-A1-2009/021266
- ES-A6- 2 024 783
- FR-A1- 2 275 387
- US-A- 3 712 451
- US-A1- 2011 002 760
- US-A1- 2016 137 426

## Description

### Domaine technique

La présente invention concerne un dispositif de positionnement de tubes pour fluides corporels.

Un tel dispositif peut être utilisé par exemple dans un chargeur en vrac de tubes comportant chacun une éprouvette obturée à l'aide d'un capuchon.

### Etat de la technique

Les tubes à essais sont largement utilisés dans l'industrie médicale. En particulier, on utilise de très grandes quantités de tubes pour transporter et conserver des fluides corporels, par exemple du sang ou de l'urine, devant subir des analyses médicales. Ces tubes comportent souvent une éprouvette et un capuchon permettant de fermer l'éprouvette de façon hermétique. Un code-barre ou un autre indicateur est souvent collé ou rapporté sur le tube.

Les tubes sont remplies et étiquetées par les médecins ou les hôpitaux et souvent acheminés dans des laboratoires d'analyse médicale afin d'effectuer les analyses demandées. Divers types de machines d'analyses médicales sont utilisées pour effectuer les tests préconisés sur les substances contenues dans les tubes. On emploie fréquemment des installations complexes comportant plusieurs stations de test successives, entre lesquelles les tubes se déplacement par exemple à l'aide d'un convoyeur.

Les tubes qui arrivent dans ce type de laboratoire doivent être sortis de leur enveloppe ou boîte de transport, puis chargés dans l'installation. A cet effet, on connait dans l'art antérieur des dispositifs de chargement en vrac (« bulk loaders »), qui permettent de prendre les tubes uns à un (« singularisation ») afin de les disposer sur le convoyeur ou sur un autre équipement de transport d'une station à l'autre.

Un tel dispositif de chargement en vrac de tubes d'essai est décrit dans WO2009021266. Ce dispositif permet d'acheminer les tubes sur une courroie de convoyeur qui les transporte à travers différentes stations de pesage, de lecture de code-barre, d'orientation etc. Les tubes sont positionnés horizontalement sur la courroie, ce qui implique des stations relativement longues. L'encombrement du dispositif est donc important.

Il existe aussi dans l'art antérieur des dispositifs pour fournir des tubes à essais selon un mode de positionnement vertical, avec le capuchon en position haute. A titre d'exemple, US2011002760 décrit un appareil muni d'un convoyeur acheminant les tubes horizontalement jusqu'à un rail. Le rail est constitué de deux parois parallèles, suffisamment espacées afin de permettre au tube de passer à travers et suffisamment serrées pour bloquer le capuchon. Le capuchon repose sur le rail et le tube à essai effectue une rotation de 90 ° lorsqu'il tombe du convoyeur sur le rail. Ce dispositif est relativement encombrant, car les tubes positionnés verticalement doivent encore se déplacer le long du rail. Il ne fonctionne de manière fiable que si tous les tubes et tous les capuchons ont des diamètres respectivement égaux.

US2016137426 divulgue un dispositif de positionnement de tubes selon le préambule de la revendication 1. Le document décrit un appareil de traitement de tubes comprenant une section de détection configurée pour détecter des informations de position d'un tube et une section de soulèvement qui fait tourner le tube dans une direction prédéterminée en fonction des informations de positions récoltées, afin de le poser dans le sens voulu sur le convoyeur. Cette étape de retournement éventuel des tubes est relativement lente et ralentit la cadence de la chaine de traitement des tubes.

ES2024783 décrit un convoyeur pour acheminer des tubes à essais depuis une source vers un dispositif de réception. Les tubes transitent en position horizontale et sont basculés en position verticale au moyen d'un collecteur en forme d'entonnoir.

US3712451 décrit un convoyeur pour acheminer des bobines depuis une source vers un dispositif de réception. Les bobines transitent en position horizontale et sont basculées en position verticale au moyen d'un collecteur en forme d'entonnoir.

FR2275387 décrit un convoyeur pour acheminer des bouteilles depuis une source vers un dispositif de réception. Les bouteilles sont basculées en position verticale au moyen d'un collecteur en forme d'entonnoir.

### Bref résumé de l'invention

Un but de la présente invention est de proposer un dispositif de positionnement de tubes permettant de mettre en place un grand nombre de tubes dans une position verticale en s'assurant que le capuchon est toujours placé sur le dessus de l'éprouvette.

Un autre but de l'invention est de proposer un dispositif de positionnement de tubes permettant de mettre en place un grand nombre de tubes en position de traitement sans devoir interrompre le procédé de traitement pour placer convenablement chaque tube à traiter.

Un autre but de l'invention est de proposer un système de positionnement de tubes à fiabilité très élevée, même pour de très grandes quantités de tubes à manipuler.

Un autre but de l'invention est de proposer un système de positionnement de tubes simple et rapide.

Un autre but de l'invention est de proposer un système de positionnement de tubes peu encombrant.

Un but est de proposer un compromis entre ces différentes exigences en partie contradictoires.

Selon l'invention, ces buts sont atteints au moyen d'un dispositif de positionnement de tubes, ledit tube comportant une éprouvette obturée à l'aide d'un capuchon, ledit dispositif comprenant :
i) un convoyeur adapté pour acheminer des tubes à positionner à partir d'une source de tubes vers un plateau de réception de tubes à positionner ;
ii) un plateau de réception de tubes à positionner conçu pour recevoir les tubes en provenance du convoyeur, ledit plateau de réception comprenant une fente s'étendant dans une direction sensiblement horizontale sous le tube;
iii) un module de détection conçu pour détecter le positionnement relatif du capuchon par rapport à l'éprouvette d'un tube à positionner et fournir un signal indiquant à un module de commande la position relative de l'éprouvette et de son capuchon;
iv) un mécanisme d'ouverture de la fente, commandé par ledit module de commande de manière à permettre le passage du tube à travers la fente et à le faire basculer verticalement avec l'éprouvette en bas et le capuchon en haut.

Cette architecture est simple, fiable et permet un flux continu, sans interruption du processus ultérieur de traitement des éprouvettes.

Selon un mode de réalisation avantageux, le dispositif comporte un doigt mobile axialement le long de la fente, la position axiale du doigt étant commandée par le module de commande.

Le basculement du tube en position verticale avec le capuchon en haut est obtenu par la gravité, en retenant le capuchon lors de sa chute au moyen d'un doigt.

De manière avantageuse, une fois la position relative d'un tube à positionner déterminée par le module de détection, le doigt mobile est conçu pour se positionner sous la zone du capuchon de ce tube. Le doigt libère alors la portion de fente sous l'extrémité du tube opposée au capuchon, ce qui permet au tube de basculer en position verticale avec le capuchon en haut retenu par le doigt, et l'extrémité opposée du tube vers le bas.

Le tube passe alors verticalement à travers la fente lorsque le doigt poursuit son déplacement en direction du capuchon, et/ou suite au déplacement du centre de gravité du tube lors de son basculement.

L'utilisation d'un doigt mobile permet de mettre en oeuvre de façon simple et fiable un mode de libération de tubes en retenant le capuchon, de sorte que l'éprouvette, en étant libérée en premier lieu, passe par la fente en adoptant une position sensiblement verticale, le capuchon étant au-dessus de l'éprouvette.

Le dispositif permet ainsi de fournir un approvisionnement fiable et régulier de tubes convenablement positionnés verticalement, prêts pour un traitement ultérieur par des stations dans le dispositif de chargement en vrac et/ou dans une machine ultérieure d'une installation de test alimentée par ce dispositif de chargement en vrac.

Dans un autre mode de réalisation, le basculement du tube en position verticale avec le capuchon en haut est obtenu par la gravité, en ouvrant d'abord la portion de fente sur l'extrémité du tube opposée au capuchon. Il est alors possible de se passer de doigt.

Le passage à travers la fente peut être contrôlé par deux tiges parallèles qui bloquent le tube en position de blocage, notamment lors de sa réception depuis le convoyeur, et qui peuvent s'écarter l'une de l'autre pour libérer ce tube afin de la faire basculer en position verticale.

Les tiges peuvent être ménagées dans le plateau du dispositif.

Les deux tiges peuvent être séparées par la fente, ou être ménagées au-dessus de cette fente.

Dans un mode de réalisation, les deux tiges s'écartent l'une de l'autre en restant parallèles entre elles. Le tube tombe alors horizontalement, et son basculement est provoqué par le contact du capuchon avec le doigt positionné à cet effet sous le passage entre les deux tiges.

Dans un autre mode de réalisation, le module de commande est conçu pour espacer graduellement ces tiges de réception l'une de l'autre en commençant par le côté où le module de détection a déterminé la présence d'une éprouvette et en terminant par le côté où le module de détection a déterminé la présence d'un capuchon.

Selon un mode de réalisation avantageux, le mouvement relatif entre les deux tiges de réception est mis en oeuvre par un déplacement simultané des deux tiges, de manière à conserver la position axiale du tube.

Selon un autre mode de réalisation avantageux, le mouvement relatif entre les deux tiges de réception est mis en oeuvre par le déplacement d'une seule tige, ce qui permet de simplifier le mécanisme.

De manière avantageuse, le dispositif comprend un entonnoir agencé sous la fente, ledit entonnoir étant agencé de façon divergente vers la fente.

Egalement de manière avantageuse, ledit entonnoir libère un passage de largeur adaptée pour permettre l'acheminement des tubes en position verticale vers des stations de traitement des tubes, le capuchon étant en position haute par rapport à l'éprouvette.

L'entonnoir permet d'assurer un guidage complet, précis, avec le capuchon toujours vers le haut. Il permet de sécuriser cette position des tubes pour leur acheminement vers les stations de traitement.

L'invention prévoit également un procédé de positionnement de tubes à l'aide d'un dispositif de positionnement de tubes comprenant les étapes de :
i) acheminement de tubes à positionner à partir d'une source de tubes vers un plateau de réception de tubes à positionner ;
ii) réception de tubes à positionner par un plateau de réception conçu pour recevoir les tubes en provenance du convoyeur ;
iii) détection du positionnement relatif du capuchon par rapport à l'éprouvette d'un tube à positionner par un module de détection et envoi d'un signal indiquant à un module de commande la position relative de l'éprouvette et de son capuchon sur les tiges de réception;
iv) libération du tube à positionner en laissant passer l'éprouvette avant le capuchon.

De manière avantageuse, le procédé comprend une étape dans laquelle, une fois la position relative d'un tube à positionner déterminée par le module de détection, le doigt mobile se positionne sous la zone du capuchon de ce tube, et le tube est libéré pour basculer à travers la fente.

### Brève description des figures

Des exemples de mise en oeuvre de l'invention sont indiqués dans la description illustrée par les figures annexées dans lesquelles :
- La figure 1 est une représentation schématique d'un exemple de dispositif de positionnement de tubes ;
- La figure 2 est une vue agrandie du plateau de réception des tubes à mettre en position verticale ;
- Les figures 3 à 4 illustrent un premier mode de fonctionnement du dispositif de positionnement ;
- Les figures 5 et 6 illustrent un second mode de fonctionnement du dispositif de positionnement.

### Exemple(s) de mode de réalisation de l'invention

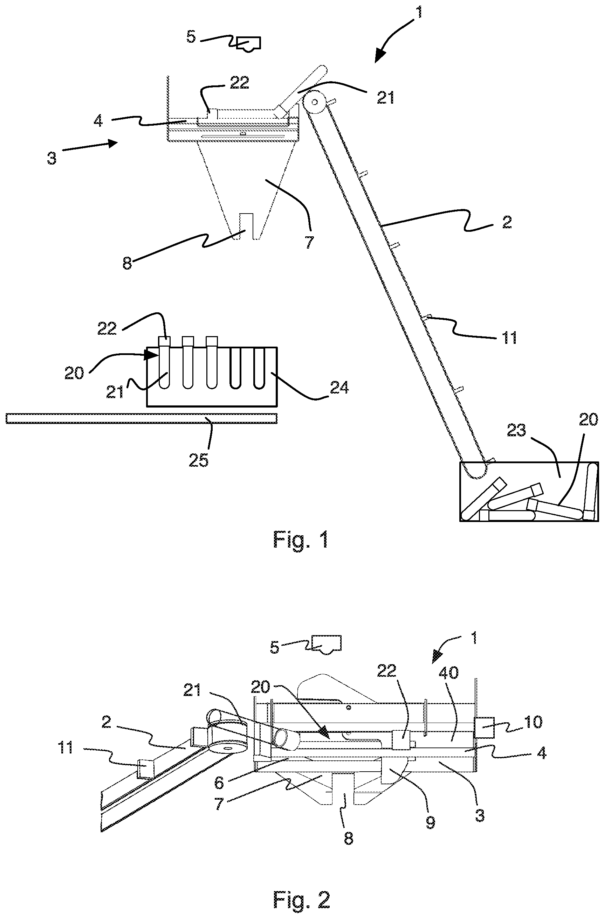

Les figures 1 et 2 illustrent un exemple de dispositif 1 de positionnement de tubes 20 destinés au transport de fluides corporels en vue de tests médicaux. Chaque tube comporte une éprouvette 21 et un capuchon 22. Une étiquette, par exemple un code-barre, ou un transpondeur, peut être collé sur chaque tube.

Le dispositif permet d'effectuer une mise à la verticale d'une pluralité de tubes fournis un à un, de façon simple, rapide et fiable. Un convoyeur 2 de tubes 20 s'approvisionne dans une source 23 de tubes telle qu'un bac ou un tapis roulant ou autre. Dans l'exemple illustré le convoyeur est agencé pour transporter les tubes à un point de chute situé au-dessus du point d'approvisionnement. Des ailettes 11, agencées à intervalles réguliers sur le convoyeur permettent de les singulariser et de les porter un par un jusqu'au point de chute du convoyeur. Un plateau 3 de réception des tubes 20 est positionné au voisinage du point de chute à l'extrémité supérieure du convoyeur 2 de façon à ce que chaque tube ainsi acheminé bascule du convoyeur pour se poser sur le plateau 3, en position sensiblement horizontale. « Sensiblement horizontal » signifie ici que l'angle entre l'axe longitudinal du tube et l'horizontale n'excède pas 50° en valeur absolue.

Le plateau de réception 3 comporte une fente 6 sous la zone de réception du tube. La largeur de la fente 3 est supérieure à la largeur des tubes 20.

Dans le mode de réalisation illustré, le plateau 3 comporte en outre deux tiges 4 mobiles, qui, en mode de réception de tubes, sont sensiblement parallèles entre elles et définissent entre elles un passage 40 au-dessus de la fente 6 et orienté comme cette fente. La largeur du passage 40 est inférieure au diamètre d'une éprouvette 21. Les tubes 20 en provenance du convoyeur arrivent les uns après les autres sur ce passage, et reposent ainsi sur les deux tiges, au-dessus de la fente 6. Les tiges permettent de bloquer ou de libérer sélectivement le passage des tubes à travers la fente 6.

Dans un mode de réalisation non illustré, il est aussi possible de réaliser une fente 6 directement à travers le plateau 3, sans prévoir de tiges au-dessus de cette fente. Dans ce cas, le tube est retenu sur la fente soit par un ou plusieurs bords mobiles de la fente, soit par un doigt ou un volet coulissant ou pivotant sous la fente, afin de permettre au choix de retenir ou de provoquer le basculement du tube à travers la fente.

Les figures 1 et 2 illustrent la phase de basculement des tubes 20 depuis l'extrémité du convoyeur vers les tiges 4.

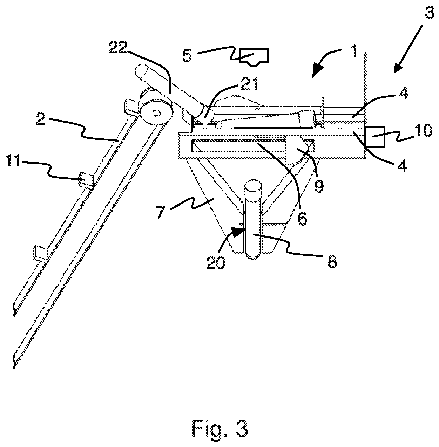

Tel que visible aux figures 3 à 6, le plateau 3 de réception comporte une fente 6 parallèle aux tiges 4 lorsqu'elles sont en mode réception de tubes.

Un module 5 de détection de position relative des capuchons 22 par rapport aux éprouvettes 21 est agencé dans la zone de réception des tubes 20 au-dessus du plateau de réception 3. Dans l'exemple illustré, le module 5 de détection est agencé au-dessus des tiges 4. On utilise de préférence un module optique, par exemple une caméra, mais d'autres types de modules peuvent aussi être utilisés, par exemple un palpeur capable de détecter la présence d'un capuchon 22 à l'avant ou à l'arrière du tube. Dans une variante non illustrée, le module de détection peut aussi être agencé au-dessus du convoyeur 2 afin de détecter la position du capuchon à l'avant ou à l'arrière du tube pendant son convoyage, au lieu de la détecter lorsque le tube est déjà sur le plateau.

Un module 10 de commande, en liaison avec le module 5 de détection, permet d'actionner les éléments assurant la mise à la verticale des tubes avec le capuchon 22 au-dessus de l'éprouvette 21. Le passage de la position horizontale des tubes, posés sur les tiges 4, à une position verticale, est illustré sur les figures 3 à 6.

Sous le plateau 3 de réception, en alignement avec la fente 6, un entonnoir 7 permet de réceptionner les tubes 20 libérés par les tiges 4 mobiles. La partie basse de l'entonnoir prévoit un passage 8 ajusté, légèrement plus grand que le diamètre du tube, pour assurer un bon positionnement vertical de ce dernier, et un alignement précis, par exemple pour assurer une mise en place dans un réceptacle 24 au-dessus du convoyeur de sortie 25. Le convoyeur de sortie 25 amène les tubes un à un, en position verticale, vers les stations de traitement ultérieures.

Un module de lecture de code-barre afin de lire les codes-barres sur l'éprouvette peut être prévu par exemple au-dessus du plateau. Une ou les tiges 4 peuvent être rotatives afin de faire tourner le tube et d'orienter le code-barre dans la position angulaire désirée, par exemple afin de le mettre en face du module de lecture de code-barre

Les figures 3 à 4 illustrent un premier mode de réalisation du module de transposition des tubes d'une position sensiblement horizontale à une position sensiblement verticale. Le module 5 de détection détecte l'arrivée d'un tube 20 sur le plateau 3, par exemple sur les tiges 4 lorsque des tiges sont présentes, ou directement au-dessus de la fente 6 dans un mode de réalisation sans tiges. Le module 5 détecte aussi l'orientation du tube, afin de déterminer de quel côté se trouve le capuchon par rapport à l'éprouvette, soit à l'arrière (près du convoyeur) ou à l'avant (à distance de celui-ci). Le module de commande 10 émet un signal de commande qui dépend de cette détection.

Un doigt 9 mobile, déplaçable axialement le long la fente 6, est commandé par le module de commande 10 pour venir se positionner sous le capuchon de ce tube, c'est-à-dire soit à l'avant de la fente 6 lorsque le tube arrive avec le capuchon à l'avant, soit à l'arrière de cette fente dans le cas contraire. Les déplacements axiaux du doigt mobile sont assurés par exemple par un actionneur électrique.

Une fois la position relative du capuchon détectée par le module 5 de détection, le module 10 de commande provoque l'écartement du passage 40 entre les tiges 4, de manière à permettre au tube 20 de passer entre ces tiges. Le tube tombe alors par gravité dans la fente 6, et entre en contact avec le doigt 9 qui provoque son basculement par gravité en position verticale avec le capuchon en haut et l'éprouvette en bas.

Le tube passe alors verticalement à travers la fente lorsque le doigt poursuit son déplacement en direction du capuchon, et/ou suite au déplacement du centre de gravité du tube lors de son basculement.

Dans un mode de réalisation non illustré sans tiges, le tube arrive directement sur la fente obstruée par le doigt, ou par un autre type de volet. Ce doigt se déplace ensuite en ouvrant d'abord la portion de fente 6 sous l'extrémité du tube opposée au capuchon, de manière à provoquer en une seule action la libération de la fente et le basculement du tube en position verticale avec le capuchon en haut retenu par le doigt, et l'extrémité opposée du tube vers le bas.

La figure 3 illustre un exemple de libération d'un tube. Sur cette figure, le capuchon 22 du tube posé sur les tiges 4 est à l'avant, c'est-à-dire à l'opposé du convoyeur. Tel qu'illustré, le tube tombe dans l'entonnoir 7, et descend le long des parois de l'entonnoir pour arriver au passage 8 ajusté. A ce moment, le tube est en position sensiblement verticale, prêt à être transporté vers des stations de traitement et/ou vers une installation d'analyse médicale du contenu des tubes.

Pendant qu'un premier tube est libéré pour basculer en position verticale, un deuxième peut être déposé sur les tiges 4, alors qu'un troisième est déjà en train de terminer son cheminement à travers le passage 8.

Pour libérer un tube, les tiges 4 mobiles peuvent être déplacées selon plusieurs modes. Les deux tiges peuvent par exemple se mouvoir de façon symétrique, en s'écartant progressivement l'une de l'autre. Le déplacement peut être limité à une seule des deux tiges, qui peut s'écarter de l'autre pour libérer le tube. Les déplacements des tiges 4 peuvent être de simples translations latérales, ou des mouvements de pivotement de façon à libérer l'espace entre les tiges, ou une combinaison de ces deux types de déplacements.

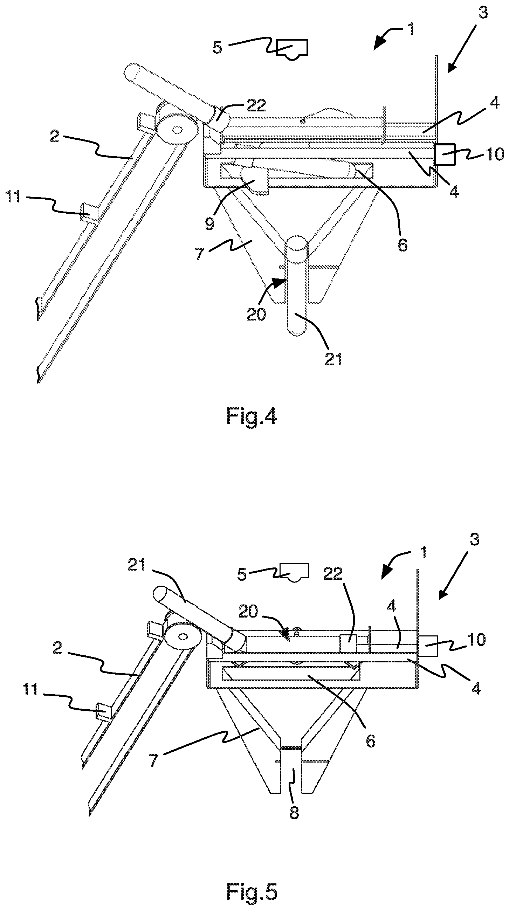

La figure 4 illustre le dispositif de la figure 3, pour un cas où un tube arrive en sens opposé, avec le capuchon 22 l'arrière, c'est-à-dire à proximité du convoyeur. Après détection de l'orientation du tube, le doigt 9 est placé sous le capuchon, dans ce cas, à proximité du convoyeur. Le tube est libéré de façon similaire au cas précédent, et suit un cheminement similaire, pour se retrouver en position verticale, le capuchon 22 étant au-dessus de l'éprouvette 21.

En variante, le système comporte deux doigts 9, agencés à chacune des extrémités de la fente 6. En fonction de la position relative du capuchon 22, le doigt se trouvant sensiblement sous le capuchon s'avance sous ce dernier, pour obstruer partiellement la fente 6 au niveau du capuchon, tandis que l'autre doigt libère le passage de l'éprouvette.

La figure 5 illustre un second mode de réalisation du module de transposition des tubes d'une position sensiblement horizontale à une position sensiblement verticale. Ce mode de réalisation opère sans doigt 9. Pour assurer une mise à la verticale des tubes 20, les tiges 4 mobiles sont conçues pour ouvrir le passage de façon à libérer tout d'abord l'éprouvette 21 puis le capuchon 22. Le module 10 de gestion commande l'ouverture du passage ou l'écartement des tiges en fonction des données de positionnement du capuchon 22 reçues du module 5 de détection.

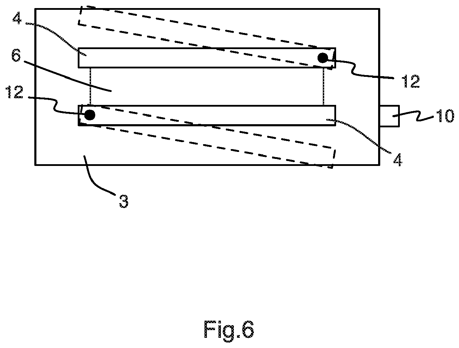

Pour s'écarter de façon à libérer un côté du tube avant l'autre, les tiges peuvent être montées pivotantes, par exemple une tige avec un pivot 12 à une extrémité, et l'autre tige avec un pivot 12 à l'extrémité opposée, tel qu'illustré à la figure 6. On obtient ainsi un agencement permettant de libérer une éprouvette avant le capuchon, quel que soit le sens de l'éprouvette.

### Numéros de référence employés sur les figures

- 1: Dispositif de positionnement
- 2: Convoyeur
- 3: Plateau de réception des tubes
- 4: Tiges mobiles
- 40: Passage entre les deux tiges
- 5: Module de détection
- 6: Fente
- 7: Entonnoir
- 8: Passage ajusté
- 9: Doigt mobile
- 10: Module de commande
- 11: Ailette
- 12: Pivot de tige mobile
- 20: Tube
- 21: Eprouvette
- 22: Capuchon
- 23: Source (réserve) de tubes
- 24: Réceptacle
- 25: Convoyeur de sortie

## Revendications

1. Dispositif (1) de positionnement de tubes (20) comportant chacun une éprouvette (21) obturée à l'aide d'un capuchon (22), ledit dispositif comprenant :
i) un convoyeur (2) adapté pour acheminer les tubes (20) à positionner à partir d'une source (23) de tubes vers un plateau (3) de réception de tubes à positionner ;
ii) un plateau (3) de réception de tubes à positionner conçu pour recevoir successivement chaque tube (20) en provenance du convoyeur (2)
iii) un module de détection (5) conçu pour détecter le positionnement relatif du capuchon (22) par rapport à l'éprouvette (21) et fournir un signal indiquant à un module (10) de commande la position relative de l'éprouvette (21) et de son capuchon (22);
**caractérisé en ce que** ledit plateau (3) de réception comprend une fente (6) s'étendant dans une direction sensiblement horizontale sous le tube et **en ce que** le dispositif comprend un mécanisme d'ouverture de la fente (6), commandé par ledit module de commande de manière à permettre le passage du tube à travers la fente et à le faire basculer verticalement avec l'éprouvette en bas et le capuchon (22) en haut.

2. Dispositif (1) de positionnement de tubes (20) selon la revendication 1, comportant un doigt (9) mobile axialement le long de la fente (6), la position axiale du doigt étant commandée par le module (10) de commande.

3. Dispositif (1) de positionnement de tubes (20) selon la revendication 2, dans lequel, une fois la position relative d'un tube (20) à positionner déterminée par le module (5) de détection, le doigt (9) mobile est conçu pour se positionner sous la zone du capuchon (22) de ce tube.

4. Dispositif de positionnement de tubes selon l'une des revendications 1 à 3, ladite fente étant délimitée ou surmontée par deux tiges (4) de tubes sensiblement horizontales et susceptibles d'être déplacées l'une par rapport à l'autre entre une position permettant de retenir un tube au-dessus de la fente, et une position permettant à tube de passer entre les tiges.

5. Dispositif (1) de positionnement de tubes (20) selon les revendications 3 et 4, dans lequel le module (10) de commande est conçu pour espacer les tiges (4) l'une de l'autre tout en les maintenant parallèles entre elles, le basculement en position verticale du tube étant déterminé par la position axiale du doigt (9).

6. Dispositif (1) de positionnement de tubes (20) selon la revendication 4, dans lequel le module (10) de commande est conçu pour espacer graduellement les tiges (4) l'une de l'autre en commençant par le côté où le module de détection (5) a déterminé la présence d'une éprouvette (21) et en terminant par le côté où le module de détection (5) a déterminé la présence d'un capuchon (22).

7. Dispositif (1) de positionnement de tubes selon l'une des revendications 4 à 6, dans lequel le mouvement relatif entre les deux tiges (4) de réception est mis en oeuvre par un déplacement des deux tiges (4).

8. Dispositif (1) de positionnement de tubes selon l'une des revendications 4 à 6, dans lequel le mouvement relatif entre les deux tiges (4) de réception est mis en oeuvre par le déplacement d'une seule tige (4).

9. Dispositif (1) de positionnement de tubes (20) selon l'une des revendications précédentes, comprenant un entonnoir (7) agencé sous la fente (6), ledit entonnoir (7) étant agencé de façon divergente vers la fente (6).

10. Dispositif (1) de positionnement de tubes (20) selon la revendication 9, dans lequel ledit entonnoir (7) libère un passage (8) de largeur adaptée pour permettre l'acheminement des tubes (20) en position verticale vers un convoyeur de sortie (25), le capuchon (22) étant en position haute par rapport à l'éprouvette (21).

11. Procédé de positionnement de tubes (20) à l'aide d'un dispositif (1) de positionnement de tubes selon l'une des revendications 1 à 10, comprenant les étapes de :
i) acheminement de tubes (20) à positionner à partir d'une source (23) de tubes vers un plateau (3) de réception de tubes à positionner ;
ii) réception de tubes à positionner par un plateau (3) de réception conçu pour recevoir les tubes (20) en provenance du convoyeur (2) ;
iii) détection du positionnement relatif du capuchon (22) par rapport à l'éprouvette (21) d'un tube à positionner par un module de détection (5) et envoi d'un signal indiquant à un module (10) de commande la position relative de l'éprouvette (21) et de son capuchon (22);
iv) libération du tube (20) à positionner par gravité, en laissant passer l'éprouvette avant le capuchon (22).

12. Procédé de positionnement de tubes (20) selon la revendication 11, comprenant une étape dans laquelle, une fois la position relative d'un tube (20) à positionner déterminée par le module de détection, un doigt (9) mobile se positionne sous la zone du capuchon (22) de ce tube.

## Patentansprüche

1. Vorrichtung (1) zum Positionieren von Röhrchen (20), die jeweils ein mit einer Kappe (22) verschlossenes Reagenzglas (21) umfassen, wobei die Vorrichtung umfasst:
i) einen Förderer (2), der so ausgelegt ist, dass er die zu positionierenden Röhrchen (20) von einer Röhrchenquelle (23) zu einem Aufnahmetisch (3) für zu positionierende Röhrchen befördert;
ii) einen Aufnahmetisch (3) für zu positionierende Röhrchen, der so ausgelegt ist, dass er nacheinander jedes von dem Förderer (2) kommende Röhrchen (20) aufnimmt;
iii) ein Erfassungsmodul (5), das dazu ausgelegt ist, die relative Positionierung der Kappe (22) in Bezug auf das Reagenzglas (21) zu erfassen und ein Signal zu liefern, das einem Steuermodul (10) die relative Position des Reagenzglases (21) und seiner Kappe (22) anzeigt;
**dadurch gekennzeichnet, dass** die Aufnahmeplatte (3) einen Schlitz (6) umfasst, der sich in einer im Wesentlichen horizontalen Richtung unter dem Röhrchen erstreckt, und dass die Vorrichtung einen Mechanismus zum Öffnen des Schlitzes (6) umfasst, der durch das Steuermodul gesteuert wird, um den Durchgang des Röhrchens durch den Schlitz zu ermöglichen und es vertikal zu kippen, wobei das Röhrchen unten und die Kappe (22) oben ist.

2. Vorrichtung (1) zum Positionieren von Röhrchen (20) gemäss Anspruch 1, mit einem Finger (9), der axial entlang des Schlitzes (6) beweglich ist, wobei die axiale Position des Fingers durch das Steuermodul (10) gesteuert wird.

3. Vorrichtung (1) zum Positionieren von Röhrchen (20) gemäss Anspruch 2, bei der, nachdem die relative Position eines zu positionierenden Röhrchens (20) durch das Erfassungsmodul (5) bestimmt wurde, der bewegliche Finger (9) so ausgelegt ist, dass er sich unter dem Bereich der Kappe (22) dieses Röhrchens positioniert.

4. Vorrichtung zum Positionieren von Röhrchen gemäss einem der Ansprüche 1 bis 3, wobei der Schlitz von zwei im Wesentlichen horizontalen Stäbe (4) begrenzt oder überragt wird, die relativ zueinander zwischen einer Position, die es ermöglicht, ein Röhrchen über dem Schlitz zu halten, und einer Position, die es ermöglicht, dass das Röhrchen zwischen den Stäben hindurchgeht, bewegt werden können.

5. Vorrichtung (1) zum Positionieren von Röhrchen (20) gemäss den Ansprüchen 3 und 4, wobei das Steuermodul (10) so ausgelegt ist, dass es die Stäbe (4) voneinander beabstandet, während sie parallel zueinander gehalten werden, wobei das Kippen des Röhrchens in eine vertikale Position durch die axiale Position des Fingers (9) bestimmt wird.

6. Vorrichtung (1) zum Positionieren von Röhrchen (20) gemäss Anspruch 4, wobei das Steuermodul (10) so ausgelegt ist, dass es die Stäbe (4) allmählich voneinander beabstandet, beginnend mit der Seite, auf der das Sensormodul (5) das Vorhandensein eines Reagenzglases (21) festgestellt hat, und endend mit der Seite, auf der das Sensormodul (5) das Vorhandensein einer Kappe (22) festgestellt hat.

7. Vorrichtung (1) zum Positionieren von Röhrchen gemäss einem der Ansprüche 4 bis 6, wobei die Relativbewegung zwischen den beiden Stäben (4) durch eine Bewegung der beiden Stäbe (4) umgesetzt wird.

8. Vorrichtung (1) zum Positionieren von Röhrchen gemäss einem der Ansprüche 4 bis 6, wobei die Relativbewegung zwischen den beiden Stäben (4) durch Verschieben eines einzelnen Stabs (4) umgesetzt wird.

9. Vorrichtung (1) zum Positionieren von Röhrchen (20) gemäss einem der vorhergehenden Ansprüche, mit einem unter dem Schlitz (6) angeordneten Trichter (7), wobei der Trichter (7) divergierend zum Schlitz (6) hin angeordnet ist.

10. Vorrichtung (1) zum Positionieren von Röhrchen (20) gemäss Anspruch 9, wobei der Trichter (7) einen Durchgang (8) mit einer Breite freigibt, die geeignet ist, die Röhrchen (20) in vertikaler Position zu einem Ausgabeförderer (25) zu befördern, wobei die Kappe (22) in Bezug auf das Reagenzglas (21) in einer erhöhten Position ist.

11. Verfahren zum Positionieren von Röhrchen (20) mit einer Vorrichtung (1) zum Positionieren von Röhrchen gemäss einem der Ansprüche 1 bis 10, mit den folgenden Schritten:
i) Zuführen von zu positionierenden Röhrchen (20) von einer Röhrchenquelle (23) zu einem Aufnahmefach (3) für zu positionierende Röhrchen;
ii) Aufnehmen von zu positionierenden Röhrchen durch ein Aufnahmefach (3), das zur Aufnahme von Röhrchen (20) von dem Förderer (2) ausgelegt ist;
iii) Erfassen der relativen Position der Kappe (22) in Bezug auf das Reagenzglas (21) eines zu positionierenden Röhrchens durch ein Erfassungsmodul (5) und Senden eines Signals, das einem Steuermodul (10) die relative Position des Reagenzglases (21) und seiner Kappe (22) anzeigt;
iv) Freigeben des zu positionierenden Röhrchens (20) durch Schwerkraft, wobei das Röhrchen vor der Kappe (22) hindurchgeht.

12. Verfahren zum Positionieren von Röhrchen (20) nach Anspruch 11, das einen Schritt umfasst, bei dem, nachdem die relative Position eines zu positionierenden Röhrchens (20) durch das Sensormodul bestimmt wurde, ein beweglicher Finger (9) unter dem Bereich der Kappe (22) dieses Röhrchens positioniert wird.

## Claims

1. A device (1) for positioning tubes (20) each having a test tube (21) sealed with a cap (22), said device comprising:
i) a conveyor (2) adapted to convey the tubes (20) to be positioned from a tube source (23) to a tube positioning tray (3);
ii) a tube positioning tray (3) adapted to successively receive each tube (20) from the conveyor(2);
iii) a detection module (5) designed to detect the relative positioning of the cap (22) with respect to the test tube (21) and to provide a signal indicating to a control module (10) the relative position of the test tube (21) and its cap (22);
**characterized in that** said receiving tray (3) comprises a slot (6) extending in a substantially horizontal direction under the tube and **in that** the device comprises a mechanism for opening the slot (6), controlled by said control module so as to allow the tube to pass through the slot and to tilt it vertically with the test tube down and the cap (22) up.

2. Device (1) for positioning tubes (20) according to claim 1, comprising a finger (9) which can move axially along the slot (6), the axial position of the finger being controlled by the control module (10).

3. Device (1) for positioning tubes (20) according to claim 2, in which, once the relative position of a tube (20) to be positioned has been determined by the detection module (5), the movable finger (9) is designed to be positioned under the area of the cap (22) of this tube.

4. Device for positioning tubes according to one of claims 1 to 3, said slot being delimited or surmounted by two substantially horizontal tube rods (4) and capable of being moved relative to each other between a position allowing a tube to be retained above the slot, and a position allowing the tube to pass between the rods.

5. Device (1) for positioning tubes (20) according to claims 3 and 4, wherein the control module (10) is designed to space the rods (4) from each other while keeping them parallel to each other, the tilting in the vertical position of the tube being determined by the axial position of the finger (9).

6. Device (1) for positioning tubes (20) according to claim 4, wherein the control module (10) is adapted to gradually space the rods (4) from each other starting from the side where the detection module (5) has determined the presence of a test piece (21) and ending with the side where the detection module (5) has determined the presence of a cap (22).

7. Device (1) for positioning tubes according to any of claims 4 to 6, wherein the relative movement between the two receiving rods (4) is implemented by a displacement of the two rods (4).

8. Device (1) for positioning tubes according to one of claims 4 to 6, wherein the relative movement between the two receiving rods (4) is implemented by the movement of a single rod (4).

9. Device (1) for positioning tubes (20) according to one of the preceding claims, comprising a funnel (7) arranged under the slot (6), said funnel (7) being arranged diverging towards the slot (6).

10. Device (1) for positioning tubes (20) according to claim 9, wherein said funnel (7) frees a passage (8) of suitable width to allow the tubes (20) to be conveyed in a vertical position towards an outlet conveyor (25), the cap (22) being in an upward position with respect to the test tube (21).

11. Method of positioning tubes (20) using a device (1) for positioning tubes according to any of claims 1 to 10, comprising the steps of:
i) conveying tubes (20) to be positioned from a tube source (23) to a tube-positioning receiving tray (3);
ii) receiving tubes to be positioned by a receiving tray (3) adapted to receive the tubes (20) from the conveyor (2);
iii) detecting the relative position of the cap (22) with respect to the test tube (21) of a tube to be positioned by a detection module (5) and sending a signal indicating to a control module (10) the relative position of the test tube (21) and its cap (22);
iv) releasing the tube (20) to be positioned by gravity, letting the test tube pass before the cap (22).

12. Method for positioning tubes (20) according to claim 11, comprising a step in which, once the relative position of a tube (20) to be positioned has been determined by the detection module, a movable finger (9) is positioned under the area of the cap (22) of this tube.
